# EUROPÄISCHE PATENTSCHRIFT

(11) **EP 1 932 699 B1**
(45) Veröffentlichungstag und Bekanntmachung des Hinweises auf die Patenterteilung: **24.02.2010**
(21) Anmeldenummer: 07023507.2
(22) Anmeldetag: 05.12.2007
(51) Int. Cl.: B60H 1/22

(54) **Verfahren zur Funktionsprüfung einer elektrischen Heizeinrichtung, insbesondere für ein Kraftfahrzeug**
Method for testing the operation of an electric heating device, in particular for a motor vehicle
Procédé destiné à la vérification du fonctionnement d'un dispositif de chauffage électrique, en particulier pour un véhicule automobile

(30) Priorität: 12.12.2006 EP 06291922
(43) Veröffentlichungstag der Anmeldung: 18.06.2008
(73) Patentinhaber: Behr France Rouffach SAS, 68250 Rouffach (FR)
(72) Erfinder: Denny, Geoffrey, 68170 Rixheim (FR); Schmittheisler, Christophe, 67680 Epfig (FR); Gries, Jean-Philippe, 68000 Colmar (FR); Herrbach, Stephane, 67220 Bassemberg (DE); Brun, Michel, 68740 Rustenhart (FR)
(74) Vertreter: Grauel, Andreas

(56) Entgegenhaltungen:
- EP-A- 1 630 013
- EP-A1- 1 542 504
- EP-A1- 1 584 504
- DE-A1- 10 234 561
- GB-A- 2 396 982

## Beschreibung

Die Erfindung betrifft ein Verfahren zur Funktionsprüfung einer elektrische Heizeinrichtung, insbesondere für ein Kraftfahrzeug, gemäß dem Oberbegriff des Anspruchs 1.

Bekannt ist die Verwendung von Bus-Systemen zur Überwachung der Funktion von elektrischen Heizeinrichtungen.

Aus der DE 102 34 561 A1 ist ein Verfahren und eine Vorrichtung zur Funktionsprüfung einer elektrischen Heizeinrichtung mit PTC-Heizelementen bekannt, die insbesondere dem Beheizen von Flüssigkeiten in einem Kfz dient. Das Verfahren zur Funktionsprüfung weist die Schritte Einschalten der Heizeinrichtung, Erfassen der Stärke des durch das PTC-Heizelement fließenden Heizstroms während einer Zeitspanne, Feststellen, ob während der Zeitspanne die Stärke des Heizstroms einen vorgegebenen Schwellenwert überschreitet oder zumindest erreicht, und Signalisieren eines Defektes, falls während der Zeitspanne die Stärke des Heizstroms den Schwellenwert nicht überschritten oder zumindest erreicht hat, auf.

Ein derartiges Verfahren lässt noch Wünsche offen.

Es ist Aufgabe der Erfindung, ein verbessertes Verfahren zur Funktionsprüfung einer elektrischen Heizeinrichtung, insbesondere mit PTC-Elementen, zur Verfügung zu stellen.

Diese Aufgabe wird gelöst durch ein Verfahren mit den Merkmalen des Anspruchs 1. Vorteilhafte Ausgestaltungen sind Gegenstand der Unteransprüche. Die Aufgabe wird ferner durch eine für das Verfahren geeignete Vorrichtung gelöst.

Erfindungsgemäß ist ein Verfahren zur Funktionsprüfung einer elektrische Heizeinrichtung, insbesondere einer PTC-Heizung für ein Kraftfahrzeug, vorgesehen, wobei die elektrische Heizeinrichtung mindestens ein PTC-Element aufweist, das - von einem PTC-Regler geregelt - bei anliegender Spannung in Folge eines Stromflusses Wärme erzeugt, wobei zur Funktionsprüfung ein Bediengerät ein Steuersignal auf einen Steuereingang des PTC-Regler gibt, und der Steuereingang zugleich einen Fehlerausgang bildet, den der PTC-Regler bei einer Funktionsstörung auf Masse zieht. Durch das "auf Masse Ziehen" ist kein zusätzlicher Ausgang erforderlich. Es wird vielmehr der Steuereingang direkt auch als Fehlerausgang verwendet. Zudem muss die Heizeinrichtung nicht in das Kraftfahrzeug-BUS-System integriert werden. Die Diagnose kann direkt ohne ein BUS-System erfolgen. Als Funktionsstörungen der Heizeinrichtung kommen beispielsweise Kurzschluss, "Open Load", Übertemperatur in Frage.

Gemäß einer einfachen, besonders kostengünstigen Variante wird im Falle einer Störung kein spezielles Rücksignal über dem Fehlerausgang übertragen. Dadurch, dass der PTC-Regier bei einer Funktionsstörung auf Masse gezogen wird, kann auch ohne eine direkte Signalübertragung bzw. durch das Signal "keine Rückmeldung, Leitung auf Masse" eine Funktionsstörung ermittelt werden und entsprechende Schritte eingeleitet werden, wie bspw. Trennen der Heizungsanordnung vom Bordnetz.

Bevorzugt wird jedoch im Falle einer Störung ein Rücksignal über dem Fehlerausgang übertragen. Aus dem Rücksignal, das vorzugsweise ein pulsweitenmoduliertes Signal ist, das vom PTC-Regler erzeugt und dem Bediengerät zugeführt wird, kann nicht nur ermittelt werden, dass eine Funktionsstörung vorliegt. Es ist vielmehr auch möglich, insbesondere bevorzugt über die Pulsweitenmodulation des Signals, die Art der Funktionsstörung dem Bediengerät mitzuteilen. Die Art der Funktionsstörung wird hierbei bevorzugt über das Tastverhältnis übermittelt. Besonders bevorzugt wird eine Mehrzahl von pulsweitenmodulierten Signalen mit gleichem Tastverhältnis übertragen.

Das Steuersignal wird bevorzugt mit der normalen Bordnetzspannung, also üblicherweise mit einer Spannung von 12 V, übertragen.

Die erfindungsgemäß überwachte Heizeinrichtung kann sowohl als Zuheizer in Verbindung mit einer herkömmlichen Klimaanlage oder einem herkömmlichen Heizer als auch in Alleinstellung vorgesehen sein. Die Heizeinrichtung kann beispielsweise im Luftführungsgehäuse der Klimaanlage oder direkt vor einem Ausströmer angeordnet sein.

Im Folgenden wird die Erfindung anhand zweier die Funktion erläuternder Ausführungsbeispiele unter Bezugnahme auf die Zeichnung im Einzelnen erläutert. In der Zeichnung zeigen:
- Fig. 1: eine schematische Darstellung zur Erläuterung des Funktion einer erfindungsgemäßen Heizeinrichtung,

- Fig. 2: eine schematische Darstellung eines Diagramms mit dem Steuersignal in Volt über der Zeit, welches den Normalbetrieb darstellt,
- Fig.3: eine schematische Darstellung eines Diagramms mit dem Steuersignal in Volt über der Zeit, welches den Betrieb im Falle eines aufgetretenen Fehlers gemäß dem ersten Ausführungsbeispiel darstellt, und
- Fig.4: eine schematische Darstellung eines Diagramms mit dem Steuersignal in Volt über der Zeit, welches den Betrieb im Falle eines aufgetretenen Fehlers gemäß dem zweiten Ausführungsbeispiel darstellt.

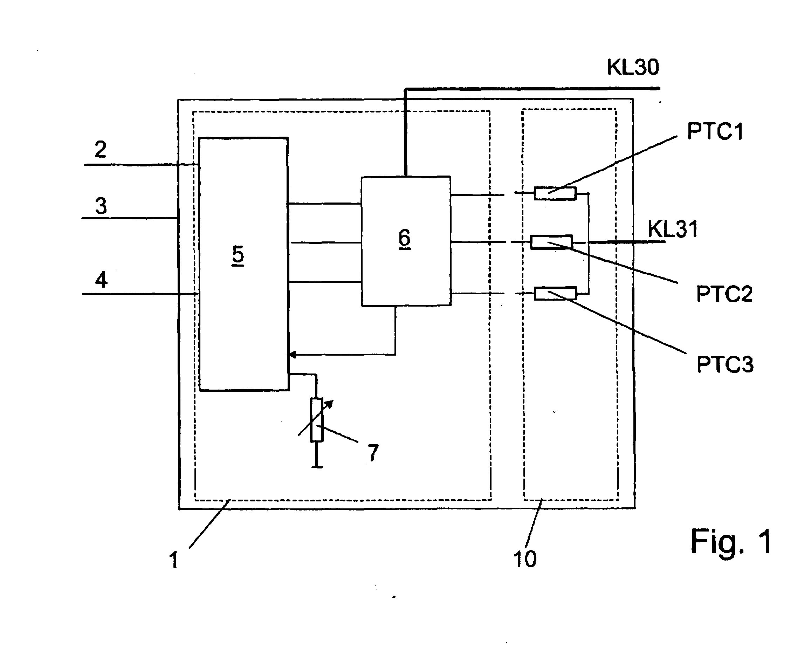

Fig. 1 zeigt eine stark schematisierte Darstellung eines PTC-Reglers 1, wie er für die Diagnose eines Fehlers bei einer PTC-Heizung 10 gemäß dem ersten und zweiten Ausführungsbeispiel verwendet wird. Hierbei sind zum PTC-Regler 1 zwei Versorgungsleitungen 2 und 3 sowie eine Steuersignal-Diagnoseleitung 4 geführt. Die Versorgungsleitung 2 ist vorliegend mit dem Pluspol einer 12 V Batterie verbunden. Die Versorgungsleitung 3 ist vorliegend mit der Masse, d.h. mit dem Minuspol verbunden. Die Versorgungsleitung 2 führt zu einer Mikroprozessoreinheit 5 des PTC-Reglers 1, von der aus die entsprechende Spannung über vorliegend drei Leistungsschalter einer Leistungsschaltereinheit 6 an einzelnen (oder allen) PTC-Elementen PTC1, PTC2 und PTC3 der PTC-Heizung 10 angelegt wird. Teil des PTC-Reglers 1 ist ferner ein Übertemperatursensor 7, welcher bei einer Überhitzung den PTC-Regier 1 und somit auch die PTC-Heizung 10 automatisch abschaltet. Die Leistungsschaltereinheit 6 ist ferner mit einem Strom-Detektions-Ausgang direkt mit der Mikroprozessoreinheit 5 rückverbunden.

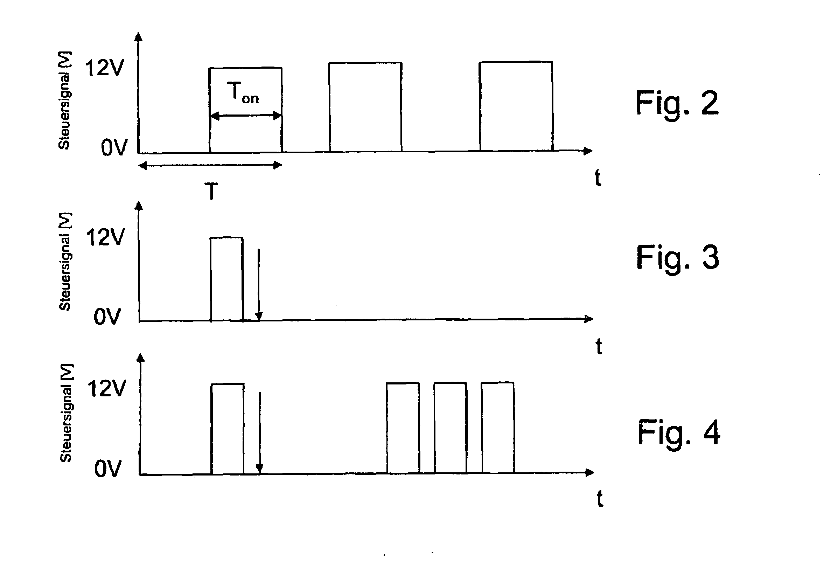

Um mit dieser Anordnung einen Fehler im Bereich der PTC-Heizung 10 ermitteln zu können, wird ein Steuersignal vom Bediengerät (nicht dargestellt) einem Steuereingang der Mikroprozessoreinheit 5 zugeführt, wie es in Fig. 2 dargestellt ist, also einzelne Spannungsimpulse in Rechteckform, vorliegend mit einer Spannung von 12V. Hierbei liegt das Tastverhältnis im Normalbetrieb Tₒₙ/T x 100 im Bereich von 0 bis 100%, wobei T die Periodendauer und Tₒₙ die Zeit ist, in welcher der Spannungsimpuls vorhanden ist.

Erfindungsgemäß ist der Steuereingang der Mikroprozessoreinheit 5 zugleich der Fehlerausgang, mittels dessen die Mikroprozessoreinheit 5 einen Fehler, bspw. einen Kurzschluss, "Open Load", Überhitzung etc., anzeigt.

Gemäß dem ersten Ausführungsbeispiel, wird der Steuereingang/Fehlerausgang, sofern durch die Mikroprozessoreinheit 5 ein Fehler ermittelt wird, direkt zur Masse gezogen. Dadurch ergibt sich, dass dem Bediengerät kein Rückmeldungssignal zugeht, so dass es eine Fehlermeldung anzeigt. Alternativ kann das Bediengerät erkennen, dass der Steuereingang/Fehierausgang oder die Steuersignal-Diagnoseleitung auf Masse liegt.

Gemäß dem zweiten Ausführungsbeispiel, wird das Steuersignal, sofern durch die Mikroprozessoreinheit 5 ein Fehler ermittelt wird, direkt zur Masse gezogen. Anschließend wird ein pulsweitenmoduliertes Signal von der Mikroprozessoreinheit 5 erzeugt und dem Bediengerät als Diagnose zugeleitet. Durch das Tastverhältnis dieses Signals kann die Art des Fehlers übermittelt werden. Vorliegend beträgt ein Tastverhältnis von 50% Kurzschluss, 25% "Open Load". Am Bediengerät wird entsprechend dem Tastverhältnis eine Fehlermeldung anzeigt, so dass sofort die Art des Fehlers bekannt ist und entsprechende Schritte eingeleitet werden können.

## Patentansprüche

1. Verfahren zur Funktionsprüfung einer elektrische Heizeinrichtung, insbesondere PTC-Heizung (10) für ein Kraftfahrzeug, wobei die elektrische Heizeinrichtung mindestens ein PTC-Element aufweist, das - von einem PTC-Regler (1) geregelt - bei anliegender Spannung in Folge eines Stromflusses Wärme erzeugt, wobei zur Funktionsprüfung ein Bediengerät ein Steuersignal auf einen Steuereingang des PTC-Regler (1) gibt, **dadurch gekennzeichnet, dass** der Steuereingang zugleich einen Fehlerausgang bildet, den der PTC-Regler (1) bei einer Funktionsstörung auf Masse zieht.

2. Verfahren nach Anspruch 1, **dadurch gekennzeichnet, dass** im Falle einer Funktionsstörung kein Rücksignal über dem Fehlerausgang übertragen wird.

3. Verfahren nach Anspruch 1, **dadurch gekennzeichnet, dass** im Falle einer Funktionsstörung das Bediengerät erkennt, dass der Steuereingang und/oder Fehlerausgang und/oder die Steuersignal-Diagnoseleitung auf Masse liegt.

4. Verfahren nach Anspruch 2 oder 3, **dadurch gekennzeichnet, dass** das Rücksignal ein pulsweitenmoduliertes Signal ist, das vom PTC-Regler (1) erzeugt und dem Bediengerät zugeführt wird.

5. Verfahren nach Anspruch 4, **dadurch gekennzeichnet, dass** das pulsweitenmoduliertes Signal über das Tastverhältnis die Art der Funktionsstörung überträgt.

6. Verfahren nach Anspruch 4 oder 5, **dadurch gekennzeichnet, dass** eine Mehrzahl von pulsweitenmodulierten Signalen mit gleichem Tastverhältnis übertragen wird.

7. Verfahren nach einem der vorhergehenden Ansprüche, **dadurch gekennzeichnet, dass** das Steuersignal mit einer Spannung von 12 V übertragen wird.

8. Elektrische Heizeinrichtung, insbesondere PTC-Heizung (10) für ein Kraftfahrzeug, wobei die elektrische Heizeinrichtung einen PTC-Regler und mindestens ein PTC-Element aufweist, das - von dem PTC-Regler (1) geregelt - bei anliegender Spannung in Folge eines Stromflusses Wärme erzeugen, wobei zu einer Funktionsprüfung ein Bediengerät ein Steuersignal auf einen Steuereingang des PTC-Regler (1) abgeben kann, **dadurch gekennzeichnet, dass** der Steuereingang zugleich einen Fehlerausgang ist, der durch den PTC-Regler (1) bei einer Funktionsstörung auf Masse gezogen ist.

## Claims

1. Method for testing the functionality of an electric heating device, in particular PTC heating (10) for a motor vehicle, the electric heating device comprising at least one PTC element which, under the control of a PTC regulator (1), generates heat as a result of a current flow when a voltage is applied to it, such that for function testing an operating unit emits a control signal to a control input of the PTC regulator (1), **characterised in that** the control input at the same time forms a defect output which the PTC regulator (1) connects to earth in the event of a malfunction.

2. Method according to Claim 1, **characterised in that** in the event of a malfunction no return signal is emitted by the defect output.

3. Method according to Claim 1, **characterised in that** in the event of a malfunction the operating unit recognises that the control input and/or the defect output and/or the control signal diagnosis lead is/are earthed.

4. Method according to Claims 2 or 3, **characterised in that** the return signal in a pulse-width-modulated signal produced by the PTC regulator (1) and sent to the operating unit.

5. Method according to Claim 4, **characterised in that** the pulse-width-modulated signal indicates the type of the malfunction by virtue of the keying ratio.

6. Method according to Claims 4 or 5, **characterised in that** a plurality of pulse-width-modulated signals with the same keying ratio are sent.

7. Method according to any of the preceding claims, **characterised in that** the control signal is sent with a voltage of 12 V.

8. Electric heating device, in particular PTC heating (10) for a motor vehicle, the electric heating device comprising at least one PTC regulator and at least one PTC element which generates heat as a result of a current flow when a voltage is applied to it, such that for function testing an operating unit can emit a control signal to a control input of the PTC regulator (1), **characterised in that** the control input at the same time forms a defect output which is connected to earth by the PTC regulator (1) in the event of a malfunction.

## Revendications

1. Procédé servant à réaliser l'essai de fonctionnement d'un dispositif de chauffage électrique, en particulier d'un chauffage (10) à coefficient de température positif (CTP) pour un véhicule automobile, où le dispositif de chauffage électrique présente au moins un élément à coefficient de température positif (CTP) qui, réglé par un régulateur (1) à coefficient de température positif (CTP), produit de la chaleur suite à un flux de courant lorsqu'une tension est appliquée, où, pour réaliser l'essai de fonctionnement, un organe de commande fournit un signal de commande à une entrée de commande du régulateur (1) à coefficient de température positif (CTP),
**caractérisé en ce que** l'entrée de commande forme en même temps une sortie de défaut que le régulateur (1) à coefficient de température positif (CTP) met à la masse dans le cas d'un défaut de fonctionnement.

2. Procédé selon la revendication 1, **caractérisé en ce que**, dans le cas d'un défaut de fonctionnement, aucun signal de réponse n'est transmis par la sortie de défaut.

3. Procédé selon la revendication 1, **caractérisé en ce que**, dans le cas d'un défaut de fonctionnement, l'organe de commande détecte le fait que l'entrée de commande et / ou la sortie de défaut et / ou le câble de diagnostic du signal de commande est à la masse.

4. Procédé selon la revendication 2 ou 3, **caractérisé en ce que** le signal de réponse est un signal à largeur d'impulsion modulée qui est produit par le régulateur (1) à coefficient de température positif (CTP) et fourni à l'organe de commande.

5. Procédé selon la revendication 4, **caractérisé en ce que** le signal à largeur d'impulsion modulée transmet, par le taux d'impulsions, la nature du défaut de fonctionnement.

6. Procédé selon la revendication 4 ou 5, **caractérisé en ce qu'**une pluralité de signaux à largeur d'impulsion modulée est transmise avec un même taux d'impulsions.

7. Procédé selon l'une quelconque des revendications précédentes, **caractérisé en ce que** le signal de commande est transmis avec une tension de 12 V.

8. Dispositif de chauffage électrique, en particulier chauffage (10) à coefficient de température positif (CTP) pour un véhicule automobile, où le dispositif de chauffage électrique présente un régulateur à coefficient de température positif (CTP) et au moins un élément à coefficient de température positif (CTP) qui, réglé par le régulateur (1) à coefficient de température positif (CTP), produit de la chaleur suite à un flux de courant lorsqu'une tension est appliquée, où, pour réaliser un essai de fonctionnement, un organe de commande peut fournir un signal de commande à une entrée de commande du régulateur (1) à coefficient de température positif (CTP),
**caractérisé en ce que** l'entrée de commande est en même temps une sortie de défaut qui, dans le cas d'un défaut de fonctionnement, est mise à la masse par le régulateur (1) à coefficient de température positif (CTP).
